# DEMANDE DE BREVET EUROPEEN

(11) **EP 0 661 198 A1**
(43) Date de publication de la demande: **05.07.1995**
(21) Numéro de dépôt: 94403054.3
(22) Date de dépôt: 29.12.1994
(51) Int. Cl.: B61D 17/00, B61D 17/04, B62D 29/04

(54) **Structure rigide et tablette incorporant une telle structure**

(30) Priorité: 03.01.1994 FR 9400004
(71) Demandeur: GEC ALSTHOM TRANSPORT SA, F-75016 Paris (FR)
(72) Inventeur: Haentjens, Stephen, F-17000 La Rochelle (FR); Bardin, Joel, F-64230 Lescar (FR); Pinaud, Yann, F-17000 La Rochelle (FR); Goutenegre, Francois, F-64230 Lescar (FR)
(74) Mandataire: Fournier, Michel

(57) **Abrégé**

La présente invention concerne une structure rigide susceptible d'être utilisée pour la réalisation de tablettes comprenant:
- une structure supérieure de maintien (1) et une structure inférieure de maintien (2) lesdites structures de maintien se faisant face;
- un premier (3) et un second (4) longerons disposés, respectivement, de part et d'autre de la structure supérieure de maintien (1) de manière à former un plan unique;
- une couche de séparation (5) disposée entre lesdites structures de maintien; et
- une couche supérieure (6) et inférieure (7) disposées, respectivement, sur la face supérieure de la structure supérieure de maintien (1) et sur la face inférieure de la structure inférieure de maintien (2);

lesdites structures de maintien (1,2), lesdits longerons (3,4), ladite couche de séparation (5) et lesdites couches supérieures (6) et inférieures (7) étant maintenus par collage.

## Description

La présente invention concerne une structure rigide susceptible d'être utilisée pour la réalisation de tablettes.

Les tablettes de l'art antérieur, par exemple utilisées dans les véhicules ferroviaires pour le transport de passagers, sont en un matériau massif, par exemple en acier, ou composite.

L'inconvénient majeur des matériaux utilisés pour la réalisation de tablette de l'état de la technique est leur poids et leur coût élevés.

A titre d'exemple, les tablettes de l'état de la technique généralement utilisées dans les véhicules ferroviaires pour le transport de passagers ont un poids compris entre 9 et 17 kg.

C'est le mérite de la demanderesse que de proposer une structure rigide ainsi qu'une tablette incorporant une telle structure et dont le poids est de l'ordre de 7 kg.

L'invention a donc pour objet une structure rigide comprenant:
- une structure de maintien;
- un premier et un second longerons disposés, respectivement, de part et d'autre de la structure supérieure de maintien de manière à former un plan unique;
- une couche supérieure et inférieure disposées, respectivement, sur la face supérieure et sur la face inférieure de la structure de maintien;

ladite structure de maintien, lesdits longerons et lesdites couches supérieures et inférieures étant maintenus par collage.

Conformément à l'invention, la structure de maintien est une structure du type mousse.

L'invention a également pour objet une structure rigide comprenant:
- une structure supérieure de maintien et une structure inférieure de maintien lesdites structures de maintien se faisant face;
- un premier et un second longerons disposés, respectivement, de part et d'autre de la structure supérieure de maintien de manière à former un plan unique;
- une couche de séparation disposée entre lesdites structures de maintien;
- une couche supérieure et inférieure disposées, respectivement, sur la face supérieure de la structure supérieure de maintien et sur la face inférieure de la structure inférieure de maintien;

lesdites structures de maintien, lesdits longerons, ladite couche de séparation et lesdites couches supérieures et inférieures étant maintenus par collage.

L'invention a également pour objet une structure rigide dans laquelle:
- la structure supérieure de maintien est une structure du type en nid d'abeille ou du type auto-raidi ou une mousse structurelle;
- la structure inférieure de maintien est une structure du type en nid d'abeille ou du type auto-raidi ou une mousse structurelle;
- lesdites structures de maintien, lesdits longerons, ladite couche de séparation et lesdites couches supérieures et inférieures sont en fibres ou en aluminium;
- des couches de protection sont disposées, respectivement, sur lesdites couches supérieures et inférieures;
- des charnières sont fixées audits longerons;
- des éléments stratifiés de même épaisseur que lesdites charnières sont disposés sur les longerons entre lesdites charnières.

L'invention a également pour objet une tablette notamment pour véhicules ferroviaires ou routiers pour transport de voyageurs comportant une structure rigide telle que défini précédemment.

Un avantage de la structure rigide selon l'invention est une configuration permettant de supprimer les différents moyens de renfort nécessaires aux structures et tablettes de l'art antérieur.

Un autre avantage de la structure rigide selon l'invention est qu'elle ne nécessite que des matériaux usuels, d'utilisation simple et peu coûteux.

Un autre avantage de la structure rigide selon l'invention est que l'agencement des différents matériaux permet une bonne tenue aux efforts de flexion et de torsion.

D'autres buts, caractéristiques et avantages de la structure rigide selon l'invention apparaîtront à la lecture de la description suivante de différents modes de réalisation, description faite en liaison avec les dessins dans lesquels:

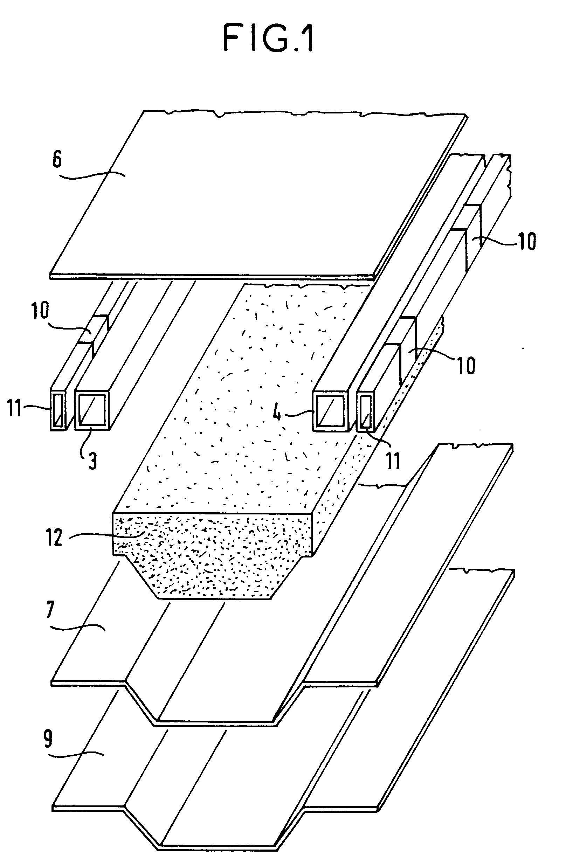

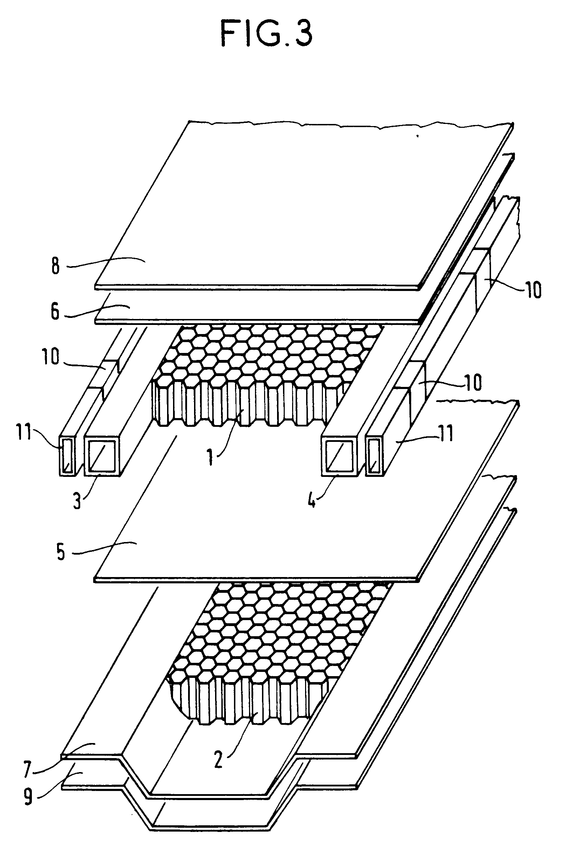

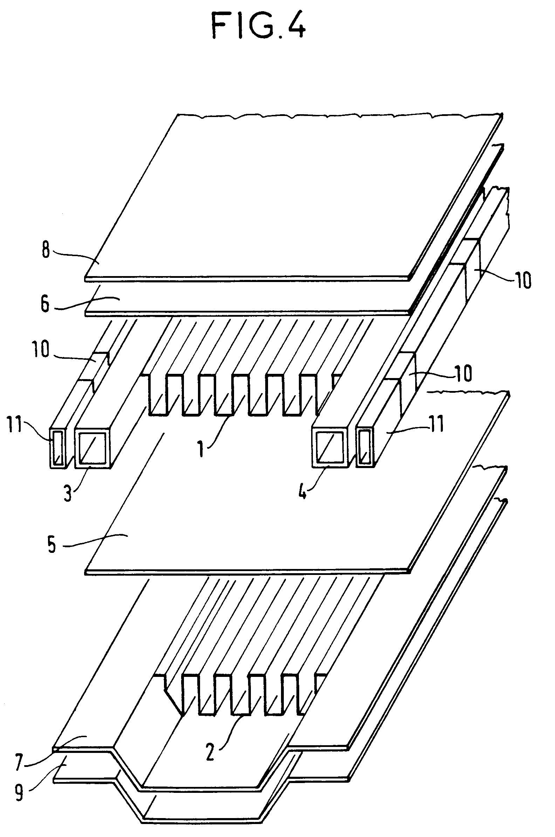

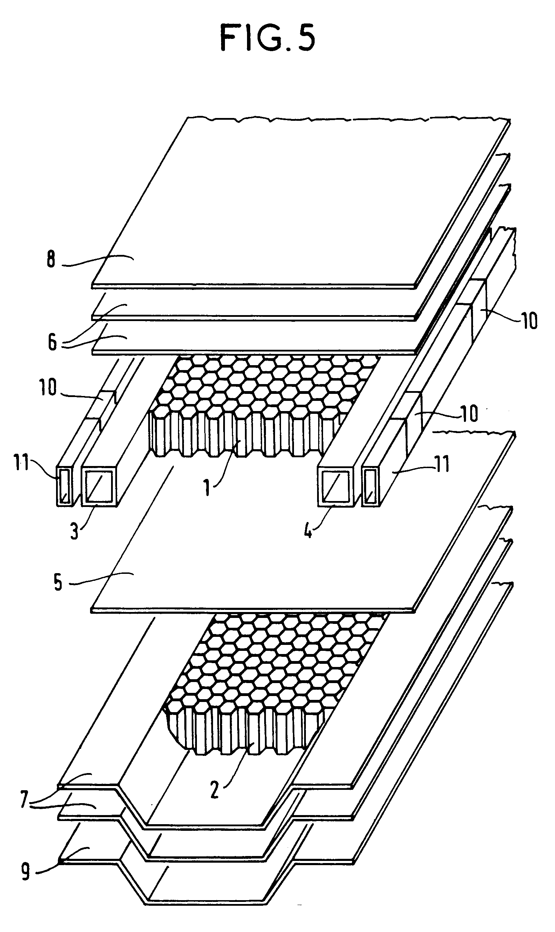

- les figures 1 à 5 représentent différents modes de réalisation de la structure rigide selon l'invention.

La structure rigide représentée à la figure 1 comprend une structure de maintien 12, un premier 3 et un second 4 longerons et une couche supérieure 6 et inférieure 7.

Les premier 3 et second 4 longerons sont disposés, respectivement, de part et d'autre de la structure de maintien 12 de manière à former un plan unique.

Les couches supérieure 6 et inférieure 7 sont disposées, respectivement, sur la face supérieure et sur la face inférieure de la structure de maintien 12.

La structure de maintien 12, les longerons 3,4 et les couches supérieures 6 et inférieures 7 sont maintenus par collage.

A titre d'exemple, la structure de maintien 12 est réalisée en mousse structurelle. Par mousse structurelle il faut comprendre une mousse rigide employée habituellement dans la réalisation de panneaux sandwichs en tant que matériaux d'âme.

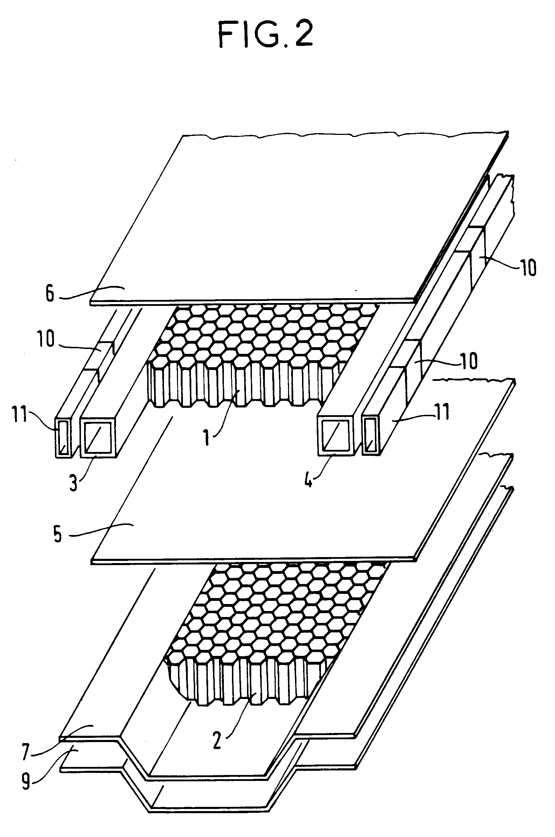

Les structures rigides représentées aux figures 2 à 5 comprennent une structure supérieure de maintien 1, une structure inférieure de maintien 2, des premiers 3 et des seconds 4 longerons latéraux, une couche de séparation 5, une couche supérieure 6 et une couche inférieure 7.

La structure supérieure de maintien 1 et la structure inférieure de maintien 2 sont disposées en face l'une de l'autre.

Les structures supérieures 1 et inférieures 2 de maintien sont des structures du type en nid d'abeille ou du type auto-raidi. Ces structures peuvent également être constituées d'une mousse structurelle.

Les premiers 3 et seconds 4 longerons sont disposés, respectivement, de part et d'autre de la structure supérieure de maintien 1 de manière à former un plan unique.

Les longerons latéraux ont pour fontion de reprendre les efforts de flexion et de torsion de la structure.

La couche de séparation 5 est disposée entre les structures de maintien.

Les couches supérieures 6 et inférieures 7 sont disposées, respectivement, sur la face supérieure de la structure supérieure de maintien 1 et sur la face inférieure de la structure inférieure de maintien 2.

Les structures de maintien 1,2,12, les longerons 3,4, la couche de séparation 5 et les couches supérieures 6 et inférieures 7 sont maintenus par collage.

Les structures de maintien 1,2,12, les longerons 3,4, ladite couche de séparation 5 et lesdites couches supérieures 6 et inférieures 7 sont en fibres (verre, carbone, aramide) ou en aluminium.

Des couches de protection 8,9 sont disposées, respectivement, sur les couches supérieures 6 et inférieures 7.

Des charnières 10 peuvent être fixées aux longerons latéraux 3,4. Ces charnières 10 sont, par exemple, solidaires de plateaux (non représentés) de manière à permettre leur pivotement.

Des éléments stratifiés 11 de même épaisseur que les charnières 10 peuvent être disposés sur les longerons 3,4 entre les charnières.

Les structures de maintien du type nid d'abeille ont par exemple une épaisseur de 20 mm de manière à avoir un bon comportement mécanique.

La couche de séparation est de manière préférentielle un film d'aluminium permettant de stabiliser la colle nécessaire à l'assemblage des deux structures de maintien. En d'autres termes, le collage est obtenu en constituant un support pour la colle, d'où une stabilisation de celle-ci.

Les couches supérieures et inférieures et les couches de protection sont par exemple en aluminium et ont une rigidité de l'ordre de 70000 MPa et une résistance à la traction de l'ordre 450 MPa.

Ces couches supérieures et inférieures et de protection peuvent également être en fibre de verre de masse de l'ordre de 0,455 kg/m2. Leur résistance en traction est de l'ordre de 1034 MPa et la rigidité de 37000 MPa.

Cette solution permet de gagner sur la masse par un dimensionnement optimal.

Une autre solution consiste en des couches supérieures, inférieures et de protection en carbonne ou en fibres aramides d'où une très bonne rigidité et une résistance à la rupture remarquable.

Les éléments stratifiés sont profilés et répartissent les efforts de l'encastrement.

Des matériaux de remplissage des cavités existantes sont connus de l'état de la technique.

La mise en forme des couches supérieures, inférieures et de protection peut être réalisée par emboutissage de plaques préchauffées et formées sous presse.

Les couches sont collées par un film de colle sur les structures de maintien.

L'invention porte également sur l'utilisation de cette structure rigide.

A titre d'exemple, la structure peut être incorporée à un pied pour former une tablette devant, par exemple, équiper les véhicules ferroviaires ou routiers pour transport de voyageurs.

Le pied est de forme générale circulaire et comporte un élément de renfort intérieur longitudinal de manière à éviter que le pied ne fléchisse lorsqu'on applique une force latérale de 50 daN, ni ne flambe sous la charge verticale de la tablette.

Le pied de la tablette peut être en aluminium de section de l'ordre de 1 mm ou en stratifié.

La liaison entre le pied et la tablette ou le sol peut se faire au moyen de plaques en aluminium embouties et collées directement sur chaque extrémité du pied.

La structure rigide est solidaire de l'une des extrémités du pied au moyen d'une embase, l'autre extrémité étant fixée au sol par l'intermédiaire de l'une des plaques.

## Revendications

1. Structure rigide comprenant:
- une structure de maintien (12);
- un premier (3) et un second (4) longerons disposés, respectivement, de part et d'autre de la structure de maintien (12) de manière à former un plan unique;
- une couche supérieure (6) et inférieure (7) disposées, respectivement, sur la face supérieure et sur la face inférieure de la structure de maintien (12);
ladite structure de maintien (12), lesdits longerons (3,4) et lesdites couches supérieures (6) et inférieures (7) étant maintenus par collage.

2. Structure selon la revendication 1, dans laquelle la structure de maintien (12) est une structure du type mousse.

3. Structure rigide comprenant:
- une structure supérieure de maintien (1) et une structure inférieure de maintien (2) lesdites structures de maintien se faisant face;
- un premier (3) et un second (4) longerons disposés, respectivement, de part et d'autre de la structure supérieure de maintien (1) de manière à former un plan unique;
- une couche de séparation (5) disposée entre lesdites structures de maintien; et
- une couche supérieure (6) et inférieure (7) disposées, respectivement, sur la face supérieure de la structure supérieure de maintien (1) et sur la face inférieure de la structure inférieure de maintien (2);
lesdites structures de maintien (1,2), lesdits longerons (3,4), ladite couche de séparation (5) et lesdites couches supérieures (6) et inférieures (7) étant maintenus par collage.

4. Structure selon la revendication 3, dans laquelle la structure supérieure de maintien (1) est une structure du type en nid d'abeille ou du type auto-raidi ou une mousse structurelle.

5. Structure selon la revendication 3, dans laquelle la structure inférieure de maintien (2) est une structure du type en nid d'abeille ou du type auto-raidi ou une mousse structurelle.

6. Structure selon l'une quelconque des revendication 3 à 5, dans laquelle lesdites structures de maintien (1,2), lesdits longerons (3,4), ladite couche de séparation (5) et lesdites couches supérieures (6) et inférieures (7) sont en fibres ou en aluminium.

7. Structure selon l'une quelconque des revendications précédentes, dans laquelle des couches de protection (8,9) sont disposées, respectivement, sur lesdites couches supérieures (6) et inférieures (7).

8. Structure selon l'une quelconque des revendications précédentes, dans laquelle des charnières (10) sont fixées audits longerons (3,4).

9. Structure selon la revendication précédentes, dans laquelle des éléments stratifiés (11) de même épaisseur que lesdites charnières (10) sont disposés sur les longerons (3,4) entre lesdites charnières.

10. Tablette, notamment pour véhicules ferroviaires ou routiers pour transport de voyageurs, comportant une structure rigide conforme à l'une quelconque des revendications précédentes.
